# DEMANDE DE BREVET EUROPEEN

(11) **EP 0 724 991 A1**
(43) Date de publication de la demande: **07.08.1996**
(21) Numéro de dépôt: 96101199.6
(22) Date de dépôt: 29.01.1996
(51) Int. Cl.: B60S 1/34

(54) **Dispositif d'essuie-glace comportant des moyens perfectionnés de démontage de sa tête d'entraînement**

(30) Priorité: 31.01.1995 FR 9501316
(71) Demandeur: VALEO SYSTEMES D'ESSUYAGE, 78321 La Verrière (FR)
(72) Inventeur: Eustache, Jean-Pierre, F-92160 Antony (FR); Viaene, Alain, F-78180 Montigny-le-Bretonneux (FR); Berge, Gilles, F-78120 Rambouillet (FR)
(74) Mandataire: Gamonal, Didier

(57) **Abrégé**

L'invention propose un dispositif d'essuie-glace du type comportant un arbre d'entraînement (12) et une tête d'entraînement (10) sur laquelle est articulé un bras d'essuie-glace, et du type comportant des moyens d'accouplement entre la tête d'entraînement (10) et l'extrémité libre de l'arbre d'entraînement (12) qui est reçue (24) dans un trou (22) formé dans la tête d'entraînement (10), qui comportent des moyens de liaison en rotation par coopération de formes (25) et des moyens de serrage axial (26), caractérisé en ce qu'il comporte des moyens d'extraction de l'extrémité libre de l'arbre d'entraînement (12) hors du trou (22) comportant un organe extracteur (26, 40) monté vissé, interposé entre la tête d'entraînement (10) et l'extrémité libre de l'arbre d'entraînement (12), et dont la rotation provoque un déplacement axial relatif de l'arbre d'entraînement (12) par rapport à la tête d'entraînement (10) dans le sens opposé au sens de serrage axial.

## Description

La présente invention concerne un dispositif d'essuie-glace du type comportant un arbre d'entraînement et une tête d'entraînement sur laquelle est articulé un bras d'essuie-glace, et du type comportant des moyens d'accouplement entre la tête d'entraînement et l'extrémité libre de l'arbre d'entraînement qui est reçue dans un trou formé dans la tête d'entraînement, qui comportent des moyens de liaison en rotation par coopération de formes et des moyens de serrage axial comportant un ensemble du type vis-écrou comportant un organe de serrage axial dont une face annulaire inférieure de serrage coopère avec une surface annulaire d'appui agencée en vis-à-vis dans la face supérieure de la tête d'entraînement.

Selon une conception connue la plus répandue, l'extrémité de l'arbre d'entraînement comporte un tronçon conique dont la surface est munie d'une série de crans en relief qui s'étendent parallèlement à l'axe, et un tronçon d'extrémité fileté.

Le tronçon conique est reçu dans un trou de profil complémentaire, à paroi lisse, formé dans la tête d'entraînement tandis que l'extrémité filetée fait saillie au-dessus de la face supérieure de la tête d'entraînement pour être vissée dans un écrou de serrage axial dont la face annulaire inférieure de serrage coopère avec la face supérieure de la tête d'entraînement.

L'opération de serrage en position montée de la tête d'entraînement au moyen de l'écrou a pour effet de provoquer une pénétration des crans dans la matière constitutive de la paroi du trou conique de la tête d'entraînement.

L'effort de serrage appliqué à l'écrou provoque une pénétration progressive des crans dans la tête d'entraînement qui s'impriment dans la paroi pour constituer des moyens d'entraînement en rotation de la tête d'entraînement par l'arbre moteur.

Cette conception particulièrement simple a pour avantage d'assurer une bonne qualité de l'entraînement permettant notamment la transmission de couples importants d'essuyage.

Toutefois, lorsque l'on désire procéder au démontage de la tête d'entraînement, on constate que cette opération est rendue particulièrement difficile, voire impossible, du fait d'un effet de quasi soudage ou matage entre la portion conique crantée de l'arbre d'entraînement et le trou conique complémentaire de la tête d'entraînement.

Ainsi, après avoir desserré l'écrou de serrage axial, l'opérateur n'arrive pas à extraire axialement la tête d'entraînement du tronçon d'extrémité libre de l'arbre d'entraînement.

La présente invention a pour but de proposer une nouvelle conception d'un dispositif d'essuie-glace du type mentionné précédemment qui permet de remédier, de manière simple et dans la mesure du possible sans faire appel à un outillage complémentaire complexe, au problème d'extraction de la tête d'entraînement après désserrage de l'organe de serrage axial.

Dans ce but, l'invention propose un dispositif d'essuie-glace du type mentionné précédemment, caractérisé en ce qu'il comporte des moyens d'extraction de l'extrémité libre de l'arbre hors du trou comportant un organe extracteur monté vissé, interposé entre la tête d'entraînement et l'extrémité libre de l'arbre et dont la rotation provoque un déplacement axial relatif de l'arbre d'entraînement par rapport à la tête d'entraînement, dans le sens opposé au sens de serrage axial.

Selon d'autres caractéristiques de l'invention :
- l'organe extracteur est constitué par l'organe de serrage axial qui comporte une collerette radiale dont la face annulaire supérieure est susceptible de coopérer avec une surface supérieure de butée portée par la tête d'entraînement ;
- la face supérieure de la tête d'entraînement comporte un logement dans lequel débouche le trou, qui reçoit à rotation la partie inférieure de l'organe de serrage axial, dont le fond annulaire constitue ladite surface annulaire d'appui et dont l'orifice d'entrée présente un diamètre intérieur inférieur au diamètre extérieur de la collerette radiale de l'organe de serrage axial ;
- le logement comporte un épaulement radial interne qui délimite l'orifice d'entrée du logement et dont la face inférieure constitue ladite surface supérieure de butée formée dans la tête d'entraînement ;
- l'épaulement radial est réalisé venu de matière avec la tête d'entraînement et il est prévu une lumière d'introduction de l'organe de serrage axial dans le logement qui débouche radialement dans une face latérale de la tête d'entraînement ;
- la lumière d'introduction présente en section un profil complémentaire de celui de la section de l'organe de serrage axial et de dimensions supérieures ;
- le fond annulaire du logement se prolonge par un méplat coplanaire le long de la lumière d'introduction;
- il est prévu des moyens de retenue de l'organe de serrage axial dans son logement pour éviter son échappement accidentel par la lumière ;
- les moyens de retenue comportent un ergot en saillie sur le méplat ;
- l'ergot est réalisé venu de matière avec la tête d'entraînement et la face inférieure de l'organe de serrage comporte une rainure diamétrale de profil complémentaire de celui de l'ergot ;
- les moyens de retenue comportent au moins un ergot formé en saillie sur un des bords latéraux de la lumière ;
- l'ergot est constitué par une portion d'un organe rapporté dans un trou de la tête d'entraînement ;
- l'ergot est constitué par un tronçon d'une goupille montée dans un trou de la tête d'entraînement ;
- les moyens de retenue comportent un anneau de retenue rapporté sur la tête d'entraînement qui entoure au moins partiellement le corps de l'organe de serrage axial ;
- l'anneau de retenue est monté dans un lamage formé dans la face supérieure de la tête d'entraînement ;
- l'anneau de retenue appartient à un capuchon de retenue emboîté sur la tête d'entraînement ;
- les moyens de retenue comportent une plaquette de retenue rapportée sur la tête d'entraînement et qui s'étend latéralement d'une partie du corps de l'organe de serrage axial ;
- la plaquette est fixée sur la face supérieure de la tête d'entraînement ;
- la plaquette est montée élastiquement dans des rainures de la tête d'entraînement ;
- l'organe de serrage axial est un écrou monté vissé sur une portion filetée du tronçon d'extrémité libre de l'arbre d'entraînement ;
- la collerette est réalisée venue de matière avec l'écrou et la face radiale inférieure de la collerette est coplanaire avec la face inférieure de serrage de l'écrou ;
- les moyens de retenue comportent un organe amovible de retenue qui s'étend axialement dans le trou taraudé de l'écrou et au moins en partie dans le trou de la tête d'entraînement ;
- l'épaulement est constitué par un anneau élastique fendu monté dans une gorge radiale du logement ;
- l'organe extracteur est un écrou d'extraction susceptible d'être monté vissé sur la tête d'entraînement qui comporte une face supérieure borgne qui s'étend en regard de la face d'extrémité libre de l'arbre d'entraînement.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant un premier mode de réalisation des principaux composants d'un dispositif d'essuie-glace réalisé conformément aux enseignements de l'invention et qui sont illustrés en position éclatée ;
- la figure 2 est une vue en section selon la ligne 2-2 de la figure 1 qui illustre les mêmes composants en position montée et serrée de la tête d'entraînement sur l'arbre d'entraînement ;
- la figure 3 est une vue similaire à celle de la figure 2 qui illustre l'écrou de serrage axial utilisé comme écrou d'extraction ;
- la figure 4 est une vue similaire à celle de la figure 1 qui illustre une première variante de réalisation des moyens de retenue de l'écrou ;
- la figure 5 est une vue de dessus de la figure 4 qui illustre l'écrou en place dans son logement ;
- les figures 6 à 9 sont des vues similaires à celles de la figure 4 qui illustrent quatre variantes de réalisation de l'ergot de retenue de l'écrou dans son logement ;
- la figure 10 est une vue en perspective similaire à celle de la figure 1 qui illustre en position montée, un capot de retenue de l'écrou dans son logement ;
- la figure 11 est une vue en perspective du capot de retenue ;
- la figure 12 est une vue en perspective qui illustre un exemple de réalisation d'un anneau de retenue de l'écrou dans son logement ;
- la figure 13 est une vue de dessus de la figure 12 ;
- les figures 14 et 15 sont des vues qui illustrent deux variantes de réalisation de la retenue de l'écrou dans son logement au moyen d'une plaquette de retenue ;
- les figures 16 et 17 sont deux vues en section axiale partielle qui illustrent deux variantes de réalisation des moyens de retenue de l'écrou sous forme d'un organe de retenue inséré dans le trou taraudé de l'écrou ;
- la figure 18 est une vue en perspective, similaire à celle de la figure 1 qui illustre une variante de réalisation de la tête d'entraînement conforme aux enseignements de l'invention ;
- la figure 19 est une vue en section axiale de la tête d'entraînement illustrée sur la figure 18 avec l'écrou illustré en position serrée, similaire à la vue de la figure 2 ;
- la figure 20 est une vue en perspective éclatée qui illustre l'organe extracteur réalisé sous la forme d'un écrou indépendant d'extraction ; et
- la figure 21 est une vue en section axiale de l'agencement illustré sur la figure 20.

Dans la description qui va suivre, des composants identiques ou similaires seront désignés par les mêmes chiffres de référence.

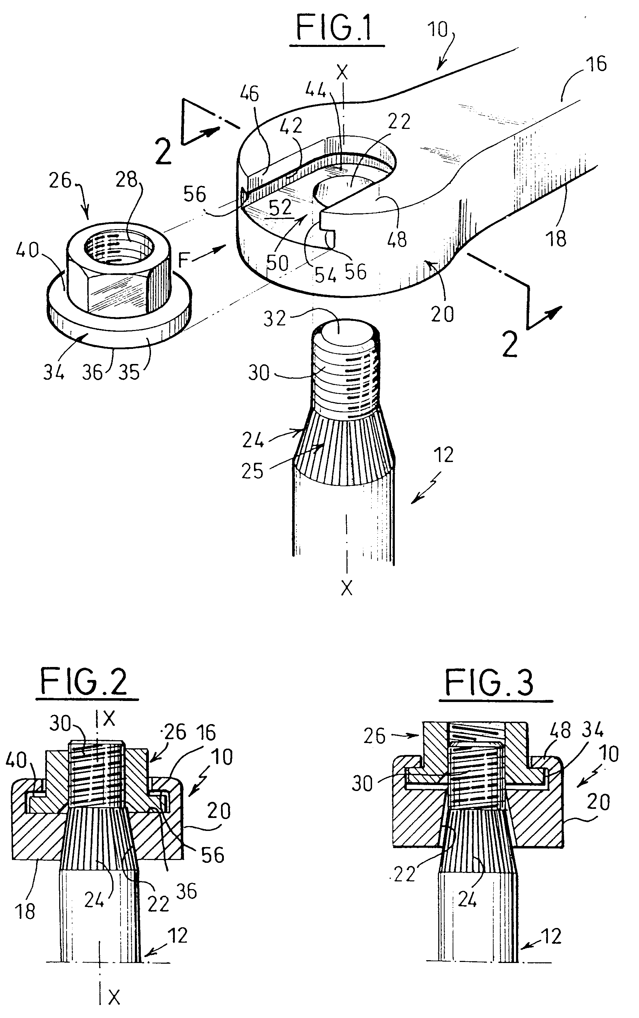

On a représenté aux figures 1 à 3 une tête 10 d'entraînement d'un bras d'essuie-glace (non représenté) qui est monté articulé sur la tête d'entraînement autour d'un axe sensiblement perpendiculaire à l'axe X-X d'entraînement en rotation de la tête 10.

L'entraînement de la tête 10 est assuré au moyen d'un arbre rotatif moteur 12, également appelé arbre d'entraînement, qui comporte des moyens (non représentés) pour son entraînement en rotation, autour de l'axe X-X, par un ensemble moto-réducteur (non représenté).

La tête d'entraînement 10 est par exemple une pièce moulée en métal de forme générale allongée qui comporte des faces supérieure 16 et inférieure 18 sensiblement parallèles et planes.

Au voisinage de son extrémité arrière 20, la tête d'entraînement 10 comporte un trou légèrement conique 22, d'axe X-X qui est prévu pour recevoir un tronçon conique complémentaire 24 du tronçon d'extrémité libre de l'arbre d'entraînement 12.

Selon une conception connue, le tronçon conique 24 comporte des crans ou cannelures 25 qui, après serrage, sont prévues pour s'imprimer dans la surface interne conique du trou 22.

Selon une conception connue, le serrage axial de la tête d'entraînement sur le tronçon d'extrémité libre de l'arbre d'entraînement 12 est assuré au moyen d'un écrou de serrage axial 26 dont le trou taraudé 28 est monté vissé sur le tronçon d'extrémité libre fileté complémentaire 30 de l'arbre d'entraînement qui se termine par une face d'extrémité libre 32.

Conformément à l'invention, le corps de l'écrou 26 comporte, à sa partie inférieure, un collet ou collerette radiale extérieure 34.

La collerette 34 délimite une face annulaire inférieure 36 de serrage qui est coplanaire avec la face inférieure du corps de l'écrou 26, une face annulaire supérieure 40 et une face latérale cylindrique 35.

Conformément à l'invention, la partie inférieure de l'écrou de serrage axial 26, et notamment la collerette 34, est reçue dans un logement 42.

Le logement 42 est formé dans la face supérieure 16 de la tête d'entraînement 10 et il présente une forme générale cylindrique dont le diamètre intérieur est légèrement supérieur au diamètre extérieur de la collerette 34.

Le trou conique 22 débouche dans le fond du logement 42 délimitant ainsi une surface annulaire d'appui 44 avec laquelle, en vue du serrage, est susceptible de coopérer la face annulaire inférieure 36 de la collerette 34.

L'orifice supérieur débouchant 46 du logement 42 présente un diamètre intérieur inférieur au diamètre intérieur du logement 42 et il est délimité à cet effet par un épaulement radial interne 48 réalisé venu de matière par moulage.

Le diamètre intérieur de l'orifice 46 est légèrement supérieur au diamètre hors tout de la partie hexagonale d'entraînement de l'écrou 26 de manière que celui-ci puisse s'étendre axialement à l'extérieur de la tête d'entraînement, c'est-à-dire au-dessus de la face supérieure 16 de cette dernière, pour permettre l'entraînement en rotation de l'écrou de serrage 26 par un outil complémentaire.

Afin de permettre l'introduction de l'écrou 26 comportant la collerette 34 dans le logement 42, la tête d'entraînement 10 comporte une lumière 50 d'introduction radiale de l'écrou 26.

Comme on peut le voir sur la figure 1, la lumière 50 présente, en section par un plan axial passant par la ligne 2-2, une forme en T renversé complémentaire, de celle de la silhouette générale de l'écrou 26, et dont les dimensions sont légèrement supérieures à celles de l'écrou afin de permettre l'introduction, selon la flèche F de la figure 1, de l'écrou 26 dans le logement 42.

La lumière est délimitée par un fond ou méplat 52 qui est coplanaire avec la surface annulaire d'appui 44.

La lumière 50 est également délimitée par deux rebords parallèles 54 dont l'écartement correspond au diamètre de l'orifice 46 et qui s'étendent parallèlement à la direction d'introduction F.

Comme on peut le voir sur la figure 2, la hauteur séparant la surface annulaire d'appui 44 et le méplat 52 de la face inférieure 56 de l'épaulement 48 est supérieure à la hauteur de la collerette 34.

On décrira maintenant le mode d'utilisation de l'agencement décrit aux figures 1 à 3.

L'écrou de serrage axial 26 est mis en place dans la tête d'entraînement 10, dans le logement 42, par introduction selon la direction radiale indiquée par la flèche F.

Le sous-ensemble constitué par la tête d'entraînement 10 et par l'écrou 26 est ensuite mis en place sur le tronçon d'extrémité libre de la tête d'entraînement 12 par introduction du tronçon fileté 30 dans la partie inférieure du taraudage 28.

L'opération de montage se poursuit ensuite en assurant le vissage de l'écrou de serrage axial 26 jusqu'à atteindre la position montée et serrée illustrée sur la figure 2 dans laquelle la face annulaire inférieure 36 de la collerette 34 est en appui axial serré contre la surface annulaire d'appui 44.

En partant de la position serrée illustrée sur la figure 2, et lorsque l'opérateur désire procéder au démontage de la tête d'entraînement 10, il procède au dévissage de l'écrou de serrage axial 26.

Le dévissage se poursuit jusqu'à ce que la face supérieure annulaire 40 de la collerette 34 vienne en appui axial contre la face inférieure annulaire de butée 56 de l'épaulement 48. En poursuivant le dévissage de l'écrou 26 monté vissé sur l'extrémité filetée 30, l'opérateur provoque ainsi un déplacement axial relatif de la tête d'entraînement 10 par rapport à l'arbre 12, de bas en haut en considérant la figure 3, ce qui provoque une extraction en force du tronçon conique et cannelé 24 hors du trou conique 22.

L'opérateur peut poursuivre le dévissage jusqu'à obtenir le dévissage complet lui permettant de déposer la tête d'entraînement 10.

Conformément aux enseignements de l'invention, l'écrou de serrage axial 26 à collerette 34 constitue donc à la fois un organe de serrage axial de la tête d'entraînement et un organe extracteur dont la rotation, dans le sens inverse de celui du vissage, provoque un déplacement axial relatif de l'arbre d'entraînement 12 par rapport à la tête d'entraînement 10 dans le sens opposé au sens de serrage axial.

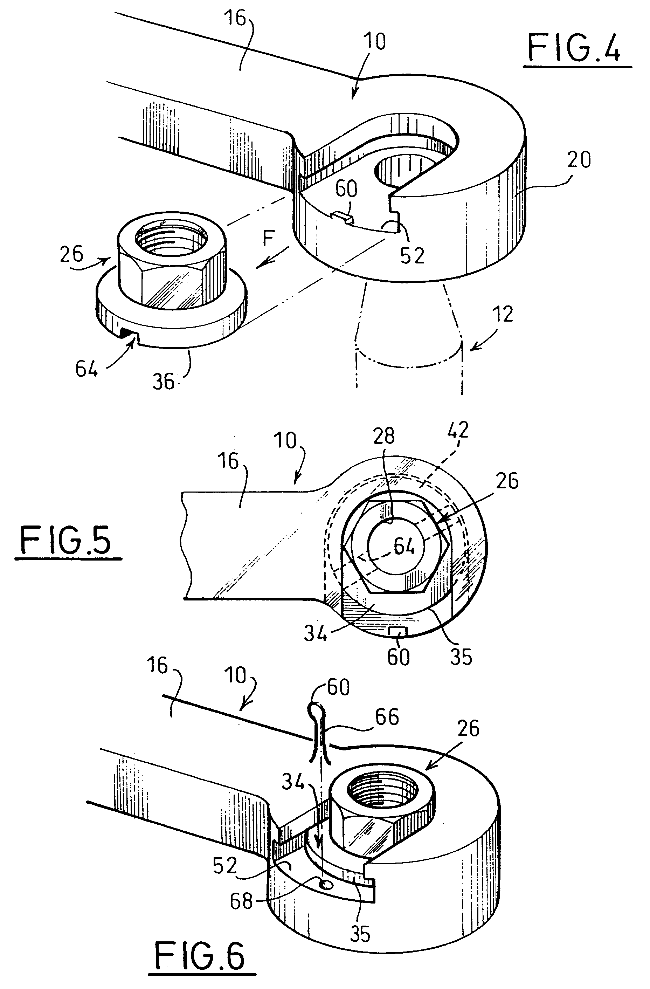

Sur la figure 4, on a représenté un ergot 60 de retenue de l'écrou 26 qui est réalisé venu de moulage avec la tête d'entraînement 10 et qui s'étend en saillie sur le méplat 52 au voisinage de la face latérale 62 de l'extrémité 20 de la tête d'entraînement 10.

L'ergot 60 a pour but d'éviter un échappement accidentel de l'écrou de serrage axial 26 en position dans son logement 42, avant l'opération de fixation par vissage de la tête d'entraînement 10 sur l'arbre d'entraînement 12.

Comme on peut le voir sur la figure 5, en position introduite de l'écrou 26, l'ergot 60 s'étend en regard de la face latérale cylindrique 35 de la collerette 34 et empêche donc tout échappement accidentel de l'écrou selon la flèche F de la figure 4.

Afin de faciliter l'introduction de l'écrou 26 dans le logement 42, la face inférieure 36 de l'écrou 26 comporte une rainure diamétrale 64 dont le profil est complémentaire de celui de l'ergot 60 mais dont les dimensions sont légèrement supérieures à celles de l'écrou.

Pour l'introduction de l'écrou 26 il suffit d'aligner la rainure 64 avec l'ergot 60 puis d'introduire radialement l'écrou 26 dans le logement 42.

L'opérateur fait ensuite pivoter l'écrou 26 autour de son axe de manière que la rainure 64 ne soit plus alignée avec l'ergot 60 évitant ainsi tout échappement accidentel de l'écrou 26.

Dans la variante de réalisation illustrée sur la figure 6, l'ergot 60 est constitué par la tête d'une goupille en forme d'épingle à cheveux 66 qui peut être mise en place, après introduction de l'écrou 26 dans son logement 42, dans un trou 68 prévu à cet effet dans le méplat 52.

En position montée de la goupille 66, sa tête en forme de boucle 60 constitue l'ergot de retenue de l'écrou 26 qui s'étend en regard de la face cylindrique latérale 35 de la collerette 34.

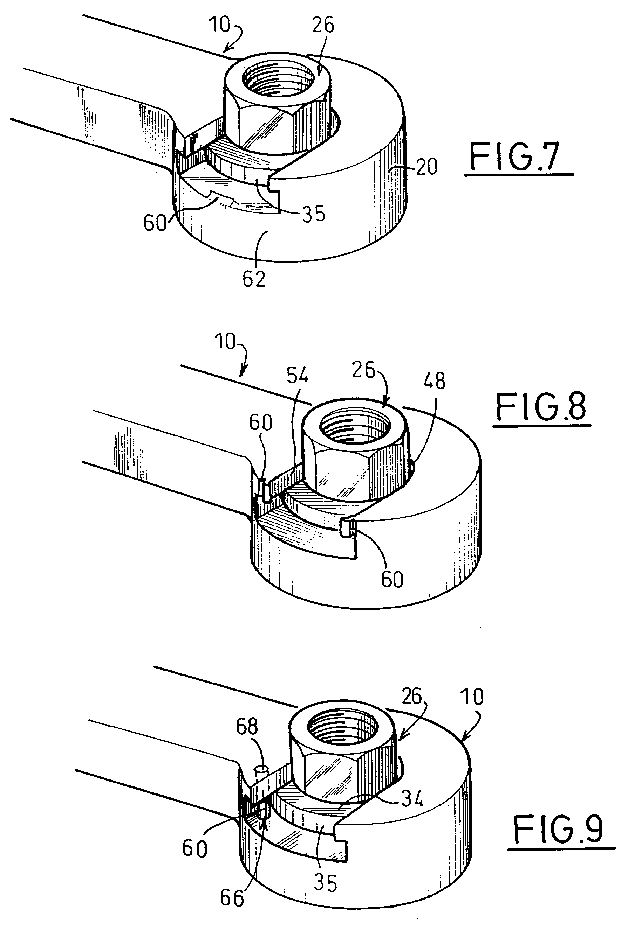

Dans la variante de réalisation illustrée sur la figure 7, l'ergot 60 a été réalisé venu de matière par poinçonnage dans la face latérale 62 de l'extrémité 20 de la tête d'entraînement 10.

Dans la variante de réalisation illustrée sur la figure 8, il est prévu deux ergots 60 dont chacun est réalisé au voisinage de l'extrémité libre d'un des bords latéraux 54 de la lumière 50 qui prolongent l'épaulement 48.

Comme dans le cas de la variante de réalisation illustrée sur la figure 7, les ergots 60 sont réalisés par déformation de la matière, après introduction de l'écrou 26 dans le logement 42, retenant celui-ci prisonnier dans le logement, mais sans empêcher sa rotation pour le serrage et l'extraction.

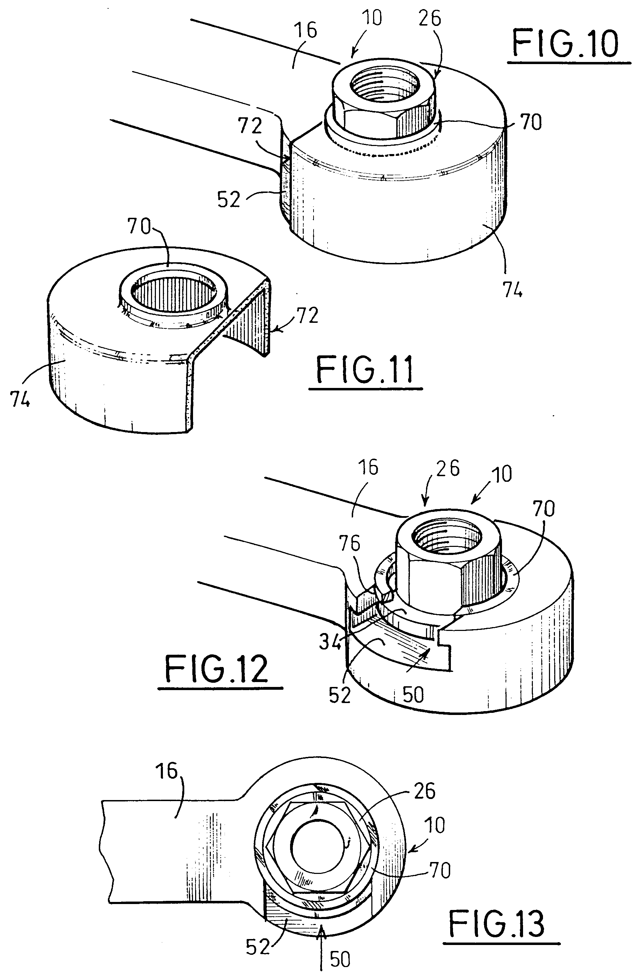

Dans la variante de réalisation illustrée sur la figure 9, l'ergot de retenue ce est constitué par un tronçon central 60 d'une goupille cylindrique 66 montée dans un trou correspondant 68 de la tête d'entraînement, le tronçon 60 s'étendant en regard de la face latérale cylindrique 35 de la collerette 34.

Dans la variante de réalisation illustrée aux figures 10 et 11, les moyens de retenue de l'écrou 26 dans le logement 42 sont constitués par un anneau de retenue 70 qui entoure la partie supérieure de l'écrou 26 qui fait saillie au-dessus de la face supérieure 16 de la tête d'entraînement 10.

L'anneau de retenue 26 permet la rotation de l'écrou 26 et il est réalisé venu de matière par moulage en matière plastique avec un capot de retenue 72 qui comporte notamment une jupe latérale 74 pour permettre son montage par emboîtement élastique sur la face latérale 52 de la tête d'entraînement 10.

Dans la variante de réalisation illustrée aux figures 12 et 13, l'anneau de retenue 70 est emmanché à force dans un lamage complémentaire 76 formé dans la face supérieure 16 de la tête d'entraînement 10.

Comme dans le cas du capot de retenue illustré aux figures 10 et 11, l'anneau de retenue 70 est mis en place après l'introduction de l'écrou 26 en position dans son logement 42.

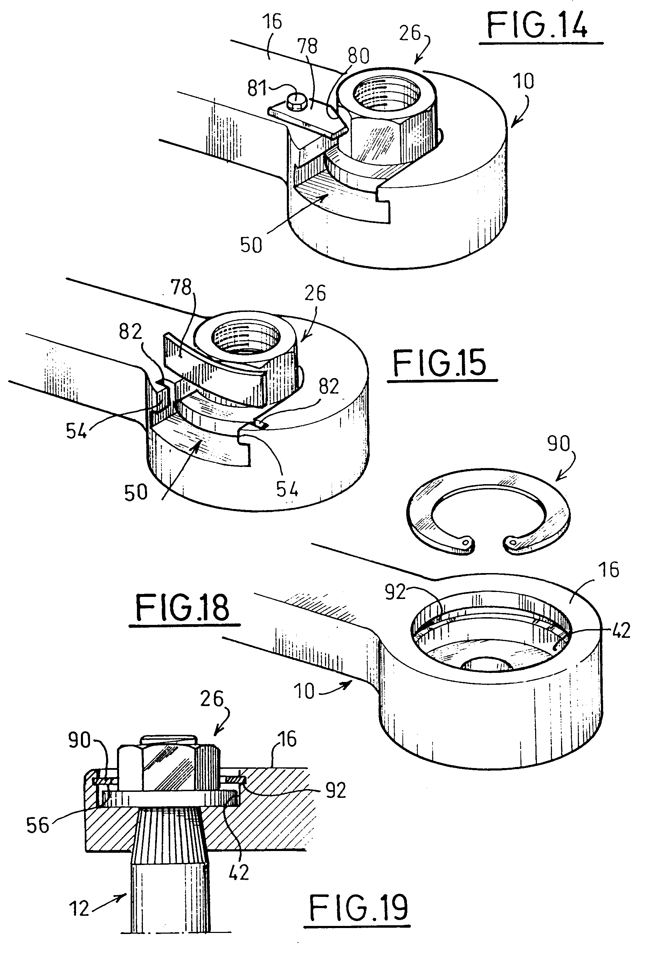

Dans la variante de réalisation illustrée sur la figure 14, les moyens de retenue de l'écrou 26 sont constitués par une plaquette 78 qui est rapportée et qui est fixée sur la face supérieure 16 de la tête d'entraînement 10, par exemple au moyen d'une vis 81.

La plaquette 78 comporte au moins un bord 80 qui s'étend en regard de la partie supérieure de l'écrou 26 qui fait saillie axialement au-delà de la face supérieure 16.

Dans la variante de réalisation illustrée sur la figure 15, la plaquette 78 est une pièce déformable élastiquement qui est mise en place emboîtée élastiquement dans des rainures verticales 82 formées dans les bords 54 de la lumière 50.

Dans les deux variantes de réalisation illustrées aux figures 14 et 15, la plaquette de retenue 78 est mise en place après introduction de l'écrou 26 dans son logement 42.

Dans toutes les variantes de réalisation qui viennent d'être décrites en référence aux figures 4 à 15, les moyens de retenue de l'écrou 26 dans son logement peuvent demeurer en place après le serrage.

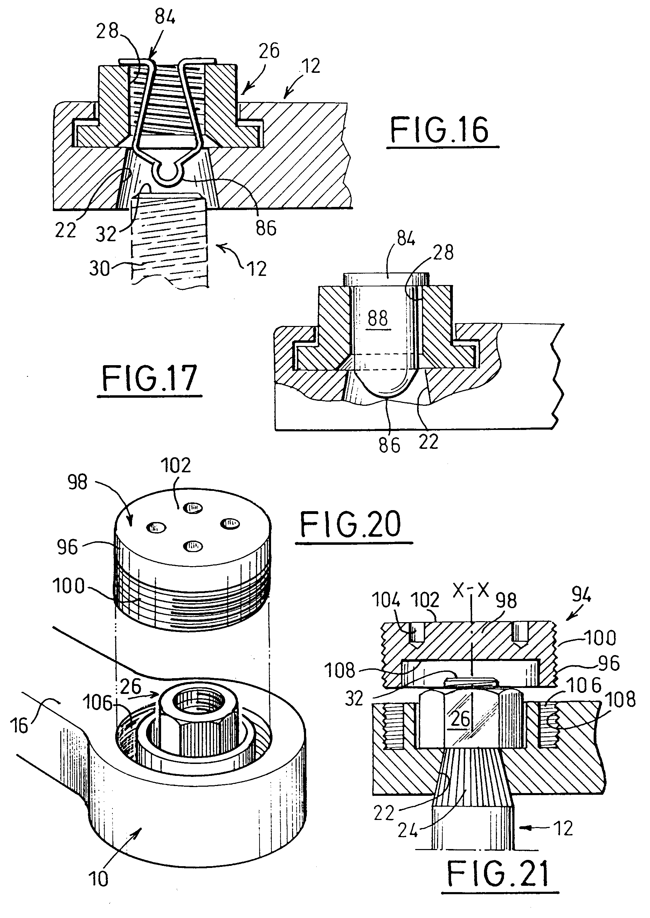

Les deux variantes de réalisation illustrées aux figures 16 et 17 des moyens de retenue sont telles que l'organe de retenue ne reste en place que tant qu'il n'a pas été procédé à l'opération de vissage de l'écrou 26 sur la portion d'extrémité filetée 30 de l'arbre d'entraînement 12.

Dans la variante de réalisation illustrée sur la figure 16, l'organe de retenue est constitué par une goupille élastique en forme d'épingle à cheveux 84 qui est introduite axialement dans le taraudage 28 de l'écrou 26 et dont l'extrémité libre en forme de boucle 86 s'étend axialement à l'intérieur du trou conique 22, empêchant ainsi tout échappement accidentel de l'écrou 26 par la lumière 50.

Lorsque l'on met en place la tête d'entraînement 10 sur l'arbre d'entraînement 12 pour procéder au serrage par vissage, l'épingle 84 est automatiquement chassée du taraudage 28 par la face supérieure 32 de l'arbre d'entraînement 12.

Dans la variante de réalisation illustrée sur la figure 17, l'épingle 84 est remplacée par un bouchon en matière plastique dont l'extrémité bombée 86 s'étend à l'intérieur du trou 22.

Le corps 88 du bouchon est monté légèrement serré dans le taraudage 28.

On décrira maintenant la variante de réalisation illustrée aux figures 18 et 19.

Dans cette variante de réalisation, le logement 42 est un logement cylindrique ouvert dans la face supérieure 16 de la tête d'entraînement 10 et il ne comporte pas de lumière pour l'introduction radiale de l'écrou 10.

En effet, l'écrou 26 est introduit axialement dans le logement 42 et celui-ci est ensuite fermé partiellement par un anneau élastique fendu 90 qui est mis en place dans une gorge radiale 92 formée dans la paroi latérale cylindrique du logement 42.

La mise en place de l'anneau élastique 90 s'effectue bien entendu après la mise en place de l'écrou de serrage 26.

La face annulaire inférieure de l'anneau élastique fendu 90 constitue la surface de butée 56 en vue de l'extraction par déserrage de l'écrou 26.

Enfin, dans le mode de réalisation illustré aux figures 20 et 21, l'organe d'extraction est constitué par un écrou supplémentaire d'extraction 94, indépendant de l'écrou de serrage axial 26.

L'écrou 94 comporte une jupe 96 et une face supérieure borgne 98.

La jupe 96 comporte un taraudage extérieur 100 et la face supérieure 102 de la plaque 98 comporte des trous 104 pour l'entraînement en rotation, autour de l'axe X-X de l'écrou d'extraction 94.

La face supérieure 16 de la tête d'entraînement 10 comporte un logement cylindrique annulaire 106 comportant un taraudage 108 complémentaire du filetage 100.

Après déserrage et dévissage complet de l'écrou 26, l'extraction est réalisée en assurant le vissage de l'écrou d'extraction 94 dans le logement 106 jusqu'à ce que la face inférieure 108 de la plaque 98 vienne en butée contre la face d'extrémité libre 32 de l'arbre d'entraînement 12.

Le vissage de l'écrou d'extraction 94 est poursuivi pour provoquer un déplacement axial relatif de l'arbre d'entraînement 12 par rapport à la tête d'entraînement 10, dans le sens opposé au sens de serrage axial, pour provoquer l'extraction du tronçon conique cannelé 24 hors du trou 22.

## Revendications

1. Dispositif d'essuie-glace du type comportant un arbre d'entraînement (12) et une tête d'entraînement (10) sur laquelle est articulé un bras d'essuie-glace, et du type comportant des moyens d'accouplement entre la tête d'entraînement (10) et l'extrémité libre de l'arbre d'entraînement (12) qui est reçue (24) dans un trou (22) formé dans la tête d'entraînement (10), qui comportent des moyens de liaison en rotation par coopération de formes (25) et des moyens de serrage axial (26) comportant un ensemble du type vis-écrou comportant un organe de serrage axial (26) dont une face annulaire inférieure (36) coopère avec une surface annulaire d'appui (44) agencée en vis-à-vis dans la face supérieure (16) de la tête d'entraînement (10), caractérisé en ce qu'il comporte des moyens d'extraction de l'extrémité libre de l'arbre d'entraînement (12) hors du trou (22) comportant un organe extracteur (26, 40) monté vissé, interposé entre la tête d'entraînement (10) et l'extrémité libre de l'arbre d'entraînement (12), et dont la rotation provoque un déplacement axial relatif de l'arbre d'entraînement (12) par rapport à la tête d'entraînement (10) dans le sens opposé au sens de serrage axial.

2. Dispositif d'essuie-glace selon la revendication 1, caractérisé en ce que l'organe extracteur est constitué par l'organe de serrage axial (26) qui comporte une collerette radiale (34) dont la face annulaire supérieure (40) est susceptible de coopérer avec une surface supérieure de butée (56) portée par la tête d'entraînement (10).

3. Dispositif d'essuie-glace selon la revendication 2, caractérisé en ce que la face supérieure (16) de la tête d'entraînement (10) comporte un logement (42) dans lequel débouche le trou (22), qui reçoit à rotation la partie supérieure de l'organe de serrage axial (26), dont le fond annulaire (44) constitue ladite surface annulaire d'appui et dont l'orifice d'entrée (46) présente un diamètre intérieur inférieur au diamètre extérieur de la collerette radiale (34) de l'organe de serrage axial (26).

4. Dispositif d'essuie-glace selon la revendication 3, caractérisé en ce que le logement (42) comporte un épaulement radial interne (48) qui délimite l'orifice d'entrée (46) du logement (42) et dont la face inférieure annulaire (56) constitue ladite surface supérieure de butée formée dans la tête d'entraînement (10).

5. Dispositif d'essuie-glace selon la revendication 4, caractérisé en ce que l'épaulement radial (48) est réalisé venu de matière avec la tête d'entraînement (10) et en ce qu'il est prévu une lumière (50) d'introduction de l'organe de serrage axial (26) dans le logement (42) qui débouche radialement dans une face latérale (62) de la tête d'entraînement (10).

6. Dispositif d'essuie-glace selon la revendication 4, caractérisé en ce que la lumière (50) d'introduction présente en section un profil complémentaire de celui de la section de l'organe de serrage axial (26) et de dimensions supérieures.

7. Dispositif d'essuie-glace selon l'une des revendications 5 ou 6, caractérisé en ce que le fond annulaire (44) du logement (42) se prolonge par un méplat coplanaire (52) le long de la lumière d'introduction (50).

8. Dispositif d'essuie-glace selon l'une quelconque des revendications 5 à 7, caractérisé en ce qu'il est prévu des moyens de retenue de l'organe de serrage axial (26) dans son logement (42) pour éviter son échappement accidentel par la lumière (50).

9. Dispositif d'essuie-glace selon la revendication 8 prise en combinaison avec la revendication 7, caractérisé en ce que les moyens de retenue comportent un ergot (60) en saillie sur le méplat (52).

10. Dispositif d'essuie-glace selon la revendication 9, caractérisé en ce que l'ergot (60) est réalisé venu de matière avec la tête d'entraînement (10) et en ce que la face inférieure (36, 38) de l'organe de serrage axial (26) comporte une rainure diamétrale (64) de profil complémentaire de celui de l'ergot (60).

11. Dispositif d'essuie-glace selon la revendication 8, caractérisé en ce que les moyens de retenue comportent un ergot (60) formé en saillie sur un des bords latéraux (54) de la lumière (50).

12. Dispositif d'essuie-glace selon l'une quelconque des revendications 9 à 11, caractérisé en ce que
l'ergot est constitué par une portion d'un organe (66) rapporté dans un trou (68) de la tête d'entraînement.

13. Dispositif d'essuie-glace selon la revendication 12, caractérisé en ce que l'ergot est constitué par un tronçon d'une goupille (66) montée dans un trou (68) de la tête d'entraînement.

14. Dispositif d'essuie-glace selon la revendication 8, caractérisé en ce que les moyens de retenue comportent un anneau (70) de retenue rapporté sur la tête d'entraînement (10) qui entoure au moins partiellement le corps de l'organe de serrage axial (26).

15. Dispositif d'essuie-glace selon la revendication 14, caractérisé en ce que l'anneau de retenue (70) est monté dans un lamage (76) formé dans la face supérieure (16) de la tête d'entraînement (10).

16. Dispositif d'essuie-glace selon la revendication 14, caractérisé en ce que l'anneau de retenue (70) appartient à un capuchon (72) de retenue emboîté sur la tête d'entraînement (10).

17. Dispositif d'essuie-glace selon la revendication 8, caractérisé en ce que les moyens de retenue comportent une plaquette de retenue (78) rapportée sur la tête d'entraînement (10) qui s'étend latéralement en regard d'une partie du corps de l'organe de serrage axial (26).

18. Dispositif d'essuie-glace selon la revendication 17, caractérisé en ce que la plaquette (78) est vissée sur la face supérieure (16) de la tête d'entraînement (10).

19. Dispositif d'essuie-glace selon la revendication 17, caractérisé en ce que la plaquette (78) est montée élastique dans des rainures (82) de la tête d'entraînement (10).

20. Dispositif d'essuie-glace selon l'une quelconque des revendications précédentes, caractérisé en ce que
l'organe de serrage axial (26) est un écrou monté vissé sur une portion filetée (30) du tronçon d'extrémité libre de l'arbre d'entraînement (10).

21. Dispositif d'essuie-glace selon la revendication 20 prise en combinaison avec la revendication 12, caractérisé en ce que la collerette (34) est réalisée venue de matière avec l'écrou (26), et en ce que la face radiale inférieure (36) de la collerette (34) est coplanaire avec la face inférieure (36, 38) de serrage de l'écrou (26).

22. Dispositif d'essuie-glace selon l'une des revendications 20 ou 21 prises en combinaison avec la revendication 8, caractérisé en ce que les moyens de retenue comportent un organe amovible de retenue (84) qui s'étend axialement dans le trou taraudé (28) de l'écrou (26) et au moins en partie (86) dans le trou (22) de la tête d'entraînement (10).

23. Dispositif d'essuie-glace selon la revendication 4, caractérisé en ce que l'épaulement est constitué par un anneau élastique fendu (90) monté dans une gorge radiale (92) du logement (42).

24. Dispositif d'essuie-glace selon la revendication 1, caractérisé en ce que l'organe extracteur est un écrou d'extraction (94) susceptible d'être monté vissé sur la tête d'entraînement (10, 106) et qui comporte une face supérieure borgne (98, 108) qui s'étend en regard de la face d'extrémité libre (32) de l'arbre d'entraînement (12).
